# EUROPÄISCHE PATENTSCHRIFT

(11) **EP 1 324 666 B1**
(45) Veröffentlichungstag und Bekanntmachung des Hinweises auf die Patenterteilung: **21.12.2005**
(21) Anmeldenummer: 01986572.4
(22) Anmeldetag: 09.10.2001
(51) Int. Cl.: A22C 25/14

(54) **EINRICHTUNG UND VERFAHREN ZUR STEUERUNG DES WERKZEUGARBEITSBEGINNS IN FISCHBEARBEITUNGSMASCHINEN**
DEVICE AND METHOD FOR CONTROLLING THE BEGINNING OF A TOOL OPERATION IN FISH TREATMENT MACHINE
DISPOSITIF ET PROCEDE POUR COMMANDER LE DEBUT DU FONCTIONNEMENT D'UN OUTIL DANS DES MACHINES DESTINEES A LA PREPARATION DU POISSON

(30) Priorität: 10.10.2000 DE 10050968
(43) Veröffentlichungstag der Anmeldung: 09.07.2003
(73) Patentinhaber: NORDISCHER MASCHINENBAU RUD. BAADER GMBH + CO KG, 23560 Lübeck (DE)
(72) Erfinder: GROSSEHOLZ, Werner, 23628 Krummesse (DE)
(74) Vertreter: Wenzel & Kalkoff
(86) Internationale Anmeldenummer: PCT/EP2001/011638
(87) Internationale Veröffentlichungsnummer: WO 2002/030209

(56) Entgegenhaltungen:
- DE-A- 19 829 376
- DE-B- 2 832 259
- US-A- 4 507 823
- US-A- 5 026 318

## Beschreibung

### Gebiet der Erfindung

Die Erfindung betrifft eine Einrichtung und ein Verfahren zum Steuern des Arbeitsbeginns mindestens eines Werkzeuges in einer Fischbearbeitungsmaschine, in der Werkzeug und Fisch entlang eines vorgegebenen Förderweges relativ zueinander bewegt werden, wobei die Position des Fisches in bezug auf das Werkzeug mit Hilfe eines in das Innere des Fisches eindringenden Führungselements bestimmt wird und das Werkzeug nach Ausrichten des Fisches infolge Eindringens dieses Führungselements mit seinem Angriff am bzw. Eingriff in den Fisch beginnt.

### Stand der Technik

In der Bearbeitung bzw. Aufbereitung von Fischen ist es in vielen Fällen, insbesondere dann, wenn der Fisch noch nicht entweidet , also die Bauchhöhle noch nicht gereinigt ist, erforderlich, ihn im Bereich derselben auszurichten, um ihn mit Hilfe eines Schlitzmessers zu öffnen und anschließend die Eingeweide mittels einer Saugeinrichtung abzusaugen und/oder mittels Kratzern, Bürsten od.dgl. eine Reinigung in diesem Bereich vorzunehmen. Der Fisch wird bei einer herkömmlichen Vorgehensweise, wie sie z.B. in DE 198 29 376 A1 beschrieben ist, in Prismen eines Kettenförderers auf dem Rücken liegend transportiert, aber es sind auch Maschinen bekannt, bei denen er von außen her mittels Förderbändern geleitet und transportiert wird. Um ihn in bezug auf seine Mittelachse auszurichten, wird ein Führungselement in die Bauchhöhle bzw. den Verdauungstrakt eingeführt, was im Falle der beschriebenen vorveröffentlichten Vorrichtung mit Hilfe eines in den Anus eindringenden Stichels erfolgt.

Bei den bekannten Vorgehensweisen entstehen dadurch, daß der Fisch in den Aufnahmeprismen des Kettenförderers oder zwischen Förderbändern nur relativ lose gerührt wird und beispielsweise Fischverformungen nicht ausgeglichen werden können, Schwierigkeiten, wenn der Anus oder ein sonstiger Eindringbereich durch einen solchen Stichel verfehlt wird. Das führt dazu, daß der Stichel den Fisch zur Seite drückt und sodann die Spitze des Stichels das Schuppenkleid des Fisches im Flankenbereich beschädigt. Insbesondere zerstören aber nachfolgende Werkzeuge wie - z.B. in der DE 198 29 376 A1 gezeigte - Sauger, Kratzer und vor allem schon das hier mit dem Stichel in Funktionseinheit arbeitende, aber auch separat einzusetzende Schlitzmesser den Fisch an nicht gewünschten Stellen, so speziell die oben liegende Seite des Fisches, so daß das Endprodukt nicht mehr den geforderten Prämium-Qualitätsansprüchen genügt. Das ist besonders nachteilig, wenn man, wie dort beschrieben, das Ziel verfolgt, den bislang nur manuell durchführbaren sogenannen "Princess Cut" maschinell durchzuführen (womit ein Entweideverfahren bezeichnet ist, das ein Arbeitsergebnis gewährleistet, das höchsten Qualitätsansprüchen genügt und die letzten 2 bis 3 cm der Bauchdecke im Kiemenbereich geschlossen beläßt), und wenn man vor allem auch Edelfische einer maschinellen Bearbeitung zugänglich machen will.

### Aufgabenstellung

Ziel der Erfindung ist es daher, Abhilfe hinsichtlich solcher Schwierigkeiten und Nachteile zu schaffen und vor allem die genannten Beschädigungen zu vermeiden.

Insbesondere ist es die Aufgabe der Erfindung, ein Tätigwerden der nachfolgenden Werkzeuge nur im Falle eines funktionsgerechten Sticheleindringens und damit der korrekten Fischpositionierung zu gewährleisten.

### Lösung

Diese Aufgabe wird bei der eingangs dargelegten Einrichtung erfindungsgemäß dadurch gelöst, daß dem Führungselement eine Überwachungseinrichtung zugeordnet ist, die einen Sensor für die Position Führungselement/Fisch, eine mit dem Sensor geschaltete Auswerteeinheit für den Soll-Istwert-Vergleich sowie eine mit dieser Auswerteeinheit geschaltete Betätigungseinrichtung für das Werkzeug umfaßt. Bei dem Verfahren der eingangs beschriebenen Art wird erfindungsgemäß die Position des Fisches relativ zum Führungselement kontrolliert und nur bei Erreichen eines einstellbaren Positionssollweries ein Signal zum Betätigen des Werkzeuges ausgelöst. Mit anderen Worten treten nach der Erfindung sowohl das Schlitzmesser als auch andere nachfolgende, relativ zum Fisch bewegbare Werkzeuge ausschließlich dann in Aktion, wenn die Kontrolle mittels der Überwachungseinrichtung einen Istwert für die Fischposition ergibt, die mit dem Sollwert des Fisches bei ordnungsgemäß eingedrungenem Stichel übereinstimmt.

Nach einer bevorzugten Ausführungsform der Erfindung kann der Sensor eine Sender/Empfängereinrichtung insbesondere für elektromagnetische Wellen sein, wobei das Kontrollieren der Position Fisch/Führungselement vorteilhaft optisch erfolgt. In diesem Falle kann man als Sensor eine Lichtquelle wählen, während der Empfänger zweckmäßigerweise im Führungselement selbst angeordnet und über Lichtleiter mit der Auswerteeinheit verbunden sein kann. Dabei wird vorteilhaft moduliertes Licht verwendet, um Störeinflüsse von Fremdlicht (Tageslicht, Lampen etc.) weitestgehend auszuschalten. Bei dieser Ausführungsform registriert der Empfänger das von dem außerhalb des Fisches und bevorzugt oberhalb desselben liegenden Sender ausgehende modulierte Licht. Befindet sich die Stichelspitze im Fisch, so registriert der Empfänger kein Lichtsignal, und die Auswerteeinheit stellt Übereinstimmung zwischen Ist- und Sollwert fest, um das Betätigungssignal zu initiieren, woraufhin die nachfolgenden Werkzeuge in die Bauchhöhle eindringen und im bzw. am Fisch tätig werden können. Verfehlt hingegen die Stichelspitze die Eindringstelle, also den Anus, und bewegt sie sich außerhalb der Bauchhöhle, so wird von dem Empfänger an der Stichelspitze das vom Sender ausgesandte Licht registriert. Dieser Umstand löst in der Auswerteeinheit ein Nicht-Übereinstimmungssignal aus, wodurch ein Verbleiben der nachfolgenden Werkzeuge in ihrer Ruheposition bewirkt wird. Der Fisch, dessen Flanke unbeschädigt bleibt, kann am Ende der Förderstrecke der Transporteinrichtung entnommen und neu in die Anlage eingegeben werden.

Bei einer anderen vorteilhaften Ausführungsform der Erfindung kann der Sensor ein mechanischer Taster für die Lage des Fisches relativ zum Führungselement sein. Dabei erfolgt verfahrensmäßig das Kontrollieren der Position Fisch/Führungselement mechanisch, und zwar durch Abtasten des Fischkörpers und Überwachung der Tastposition relativ zu einem Sollwert für die Signalauslösung. Ein solcher Taster wird vorteilhaft mittels eines Näherungsschalters überwacht.

Zweckmäßigerweise kann der Taster als doppelter Tasthebel mit je einem separat vom anderen bewegbaren Hebelelement auf jeder Seite des Führungselements ausgebildet sein. Verfahrensmäßig wird das Abtasten als Doppeltastung an zwei Tastpunkten durchgeführt und der Sollwert für die Signalauslösung durch Tastpunktvergleich ermittelt. In konstruktiver Hinsicht ist dabei auf jeder Seite der Spitze des Führungselements ein Tasthebel angeordnet, und beide Tasthebel sind auf einer gemeinsamen Drehachse gelagert, wobei ihre Stellung mittels des envähnten Näherungsschalters überwacht bzw. kontrolliert wird. Befindet sich der mittig zwischen den Tasthebeln angeordnete Stichel außerhalb des Fisches, so sind beide Tasthebel in Grundstellung, und der Näherungsschalter ist bedämpft. Wenn der Stichel in den Fisch eingedrungen ist, so werden beide Tasthebel ausgelenkt. Es wird Übereinstimmung zwischen Ist- und Sollwert registriert. Die Folge ist die gleiche wie bei dem vorstehend beschriebenen Ausführungsbeispiel für die optische Kontrolle. Gleitet hingegen das Führungselement auf einer Seite des Fisches ab, so wird nur der Tasthebel zwischen Fisch und Stichel ausgelenkt, wohingegen der zweite Tasthebel auf der fischabgewandten Seite in Grundstellung bleibt. Das hat die Registrierung einer Abweichung zwischen Ist- und Sollwert mit den bereits beschriebenen Konsequenzen für die Nichtbetätigung der Werkzeuge zur Folge.

### Kurzbeschreibung der Zeichnungen

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1A: eine Längsschnitt-Prinzipdarstellung einer optischen Überwachungseinrichtung;
- Fig. 1B: eine Draufsicht der Darstellung der Fig. 1A;
- Fig. 2A: einen Längsschnitt einer mechanischen Überwachungseinrichtung, ebenfalls als Prinzipdarstellung, und
- Fig. 2B: eine Draufsicht der Darstellung der Fig. 2A.

### Ausführungsbeispiele

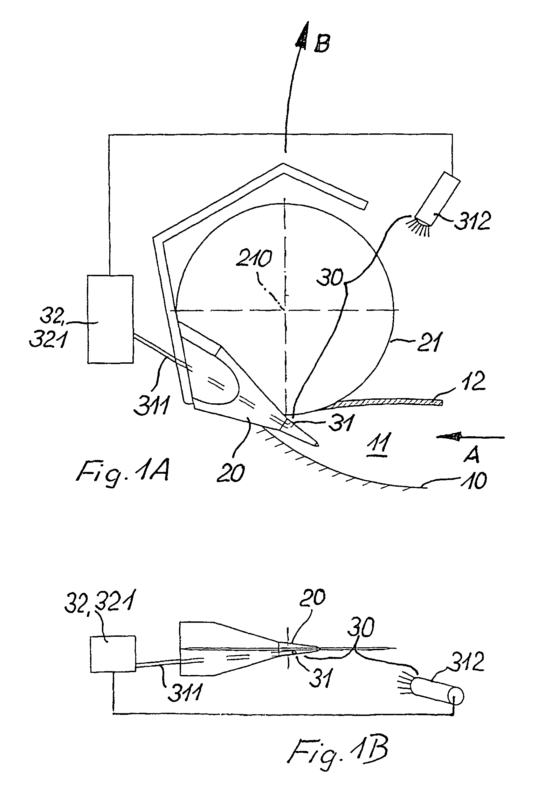

In Fig. 1 A und B erkennt man eine erste Ausführungsform einer Stichelanordnung, wie sie beispielsweise in einer Fischentweidemaschine der in DE 198 29 376 A1 gezeigten Art verwendet wird. Ein mit seiner Bauchseite nach oben in einem hier nicht näher gezeigten Förderer aufgenommener Fisch 10 wird in Richtung des Pfeiles A mit seinem Schwanzende vorauslaufend gefördert. Bauchhöhle 11 und Bauchdecke 12 des Fisches sind hier rein schematisch angedeutet. Zum Zwecke des Ausrichtens des Fisches 10 ist ein als Stichel 20 ausgebildetes Führungselement zum Eindringen in die Bauchhöhe durch die - nicht näher bezeichnete - Anusöffnung hindurch angeordnet. Dieser Stichel 20 weist in seiner Breitenerstreckung eine Ausnehmung auf, in der ein Schlitzmesser 21 zum Aufschlitzen der Bauchhöhle umläuft. Dieses Schlitzmesser 21 schlitzt den Fisch, der durch den Stichel 20 ausgerichtet gehalten wird, bei Vorschub in Richtung des Pfeiles A in seiner Bauchdecke 12 längs der Bauchnaht auf, damit nachfolgend Werkzeuge zum Absaugen der Eingeweide und Reinigen der Bauchhöhle tätig werden können.

In dem Stichel verläuft mit einem Ende an einen Rechner 32 bzw. eine Auswerteeinheit 321 angeschlossener ein Lichtleiter 311, dessen anderes Ende an der Oberseite des Stichels austritt und plan mit diesem abschließt. Dieses Ende bildet einen Sensor 31, dessen zweites Funktionselement sich gegenüberliegend und außerhalb des Fisches sowie des Messers befindet und eine auf dieses Lichtleiterende ausgerichtete Lichtquelle 312 ist. Von letzterer ausgesendetes Licht oder sonstige optische Signale erreichen das Ende des Lichtleiters 311 nicht, wenn der Stichel 20, wie in der Figur dargestellt, ordnungsgemäß in die Bauchhöhle eingedrungen ist und durch seine Position vor dem Schlitzmesser 21 sich im Bereich der noch geschlossenen Bauchdecke 12 befindet. Der mit dem Rechner 32 verbundene Lichtleiter 311 nimmt hingegen Licht auf, wenn der Stichel 20 nicht korrekt in den Anus eingedrungen ist, sondern sich außerhalb des Fisches auf dessen Oberfläche befindet. In diesem Falle registriert der Rechner 32 bzw. die Auswerteeinheit 321 die durch den Lichtleiter 311 übertragenen Lichtsignale. Die Funktion des Rechners besteht darin, diese empfangenen Lichtsignale in Steuerwerte umzusetzen, mit deren Hilfe auf hier nicht näher gezeigte, beispielsweise aus der DE 198 29 376 A1 bekannte Schrittmotore als Betätigungsglieder für Werkzeuge eingewirkt werden kann. Befindet sich - wie im ersten geschilderten Fall - die Bauchdecke ordnungsgemäß zwischen Lichtquelle 312 und Sensor 31, so wird kein Steuersignal erzeugt, und der Funktionsablauf der Maschine kann seinen normalen Gang nehmen. Wird hingegen bei Auftreffen von Licht auf den Sensor 31 ein Steuersignal oder eine Signalabfolge in der Auswerteeinheit 321 ausgelöst, so wird dieses an die Werkzeuge bzw. deren Betätigungsglieder/Schrittmotore weitergeleitet, und die Werkzeuge verbleiben in ihrer Ausgangsposition. Dies betrifft insbesondere auch das Schlitzmesser 21, das dann in seiner Position in der Ausnehmung des Stichels 20 in Ruhestellung ohne Eingriff in den Fisch verharrt. Sind, wie bei der bekannten Vorrichtung, Stichel und Schlitzmesser als gemeinsame Strukturkomponente der Vorrichtung und somit als Bewegungseinheit ausgebildet, so kehren beide entsprechend Pfeil B in die gemeinsame Ruhestellung zurück, wenn der Stichel nicht ordnungs- und funktionsgemäß in den Anus eingetreten ist. Diese gemeinsame Schwenkbewegung erfolgt um eine außerhalb der Darstellung liegende Achse, während der Stichel 20 allein noch um die Achse 210 des Messers 21 schwenken kann, um am Ende dessen Schnittes aus dem Fisch herausbewegt zu werden. Die Bewegung entsprechend Pfeil B erfolgt je einmal pro durchlaufenden Fisch.

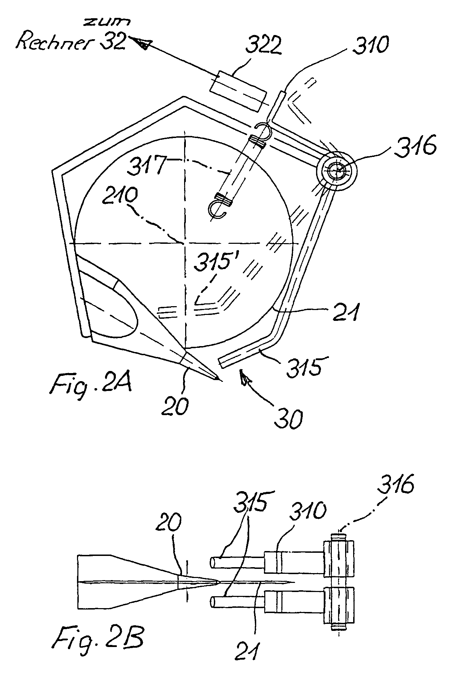

Die in Fig. 2A und B gezeigte weitere, nämlich mechanische Ausführungsform kann ebenfalls in einer Maschine der aus DE 198 29 276 A1 bekannten Art Anwendung finden. Der um die Drehachse 210 des Schlitzmessers 21 in den Fisch einschwenkbare Stichel 20 wirkt hier mit einem Sensor in Form eines Tasterpaares 315 zusammen, das auf einer Schwenkachse 316 gelagert und um diese schwenkbar ist. An jedem Tasthebel befindet sich ein mechanisches Schaltelement 310, das mit einem Näherungsschalter 322 zusammenwirkt. Dieser Näherungsschalter 322 seinerseits steht in Schaltungsverbindung mit dem hier nicht näher gezeigten Rechner 32.

In der in ausgezogenen Linien gezeigten Position befindet sich der mittig zwischen den Tasthebeln 315 angeordnete Stichel 20 außerhalb des Fisches, und beide Tasthebel sind in Grundstellung, so daß durch das Schaltelement 310 der Näherungsschalter bedämpft gehalten wird. Tritt der Stichel 20 nun funktionsgerecht in den Anus des Fisches ein, so werden beide Tasthebel in die mit 315' bezeichnete Position ausgelenkt. Der Näherungsschalter erzeugt über den Rechner ein Signal, und die nachfolgenden Werkzeuge können so gesteuert werden, daß sie nach der Bauchdeckenöffnung durch das Schlitzmesser 21 die Bauchhöhle reinigen können.

Gleitet hingegen der Stichel 20 auf einer Seite des Fisches ab, so wird nur einer der beiden Tasthebel, nämlich der auf der Fischseite und zwar zwischen Fisch und Stichel befindliche ausgelenkt. Hingegen bleibt auf der fischabgewandten Seite der Tasthebel 315 unter Wirkung einer Rückhaltefeder 317 in Grundstellung. Der Näherungsschalter 322 bleibt folglich bedämpft; es erfolgt keine Signalerzeugung.

Erkennbar kann man also mit Hilfe der durch die Position der Tasthebel 315 in Verbindung mit dem mechanischen Schaltelement 310 im Näherungsschalter 322 erzeugten Signale die nachfolgenden Werkzeuge so steuern, daß sie nur dann in die Bauchhöhle eintreten, wenn sich der Stichel 20 ordnungsgemäß im Fisch befindet und das Schlitzmesser 21 die Bauchdecke öffnet.

Alles in allem werden demnach mit Hilfe der Erfindung Voraussetzungen geschaffen, um bei der maschinellen Bearbeitung von Fischen, und zwar gerade auch von Edelfischen, sicherzustellen, daß ein Produkt erzeugt wird, das den heutzutage äußerst hohen Qualitätsansprüchen gerecht wird.

## Patentansprüche

1. Einrichtung zum Steuern des Arbeitsbeginns mindestens eines Werkzeuges in einer Fischbearbeitungsmaschine, in der Werkzeug und Fisch entlang eines vorgegebenen Förderweges relativ zueinander bewegt werden, wobei die Position des Fisches (10) in bezug auf das Werkzeug mit Hilfe eines in das Innere (11) des Fisches eindringenden Führungselements (20) bestimmt wird und das Werkzeug (21) nach Ausrichten des Fisches infolge Eindringens dieses Führungselements mit seinem Angriff am bzw. Eingriff in den Fisch beginnt, **dadurch gekennzeichnet, daß** dem Führungselement (20) eine Überwachungseinrichtung (30) zugeordnet ist, die einen Sensor (31) für die Position Führungselement/Fisch (20,10), einen mit dem Sensor geschalteten Rechner (32) für einen Soll-Istwert-Vergleich sowie eine mit diesem Rechner geschaltete Betätigungseinrichtung für das Werkzeug (21) umfaßt.

2. Einrichtung nach Anspruch 1, **dadurch gekennzeichnet , daß** der Sensor (31) eine Sender/Empfänger-Einrichtung (311,312) umfaßt.

3. Einrichtung nach Anspruch 2, **dadurch gekennzeichnet, daß** der Sender eine Lichtquelle (312) ist und der Empfänger das Ende eines im Führungselement (20) angeordneten, mit dem Rechner in Form einer Auswerteeinheit (321) verbundenen Lichtleiters (311) bildet.

4. Einrichtung nach Anspruch 1, **dadurch gekennzeichnet, daß** der Sensor ein mechanischer Taster (315) für die Lage des Fisches (10) relativ zum Führungselement (20) ist.

5. Einrichtung nach Anspruch 4, **dadurch gekennzeichnet, daß** der Taster als doppelter Tasthebel (315) mit je einem separat vom anderen bewegbaren Hebelelement auf jeder Seite des Führungselements (20) ausgebildet ist.

6. Einrichtung nach einem der Ansprüche 1 bis 5, **dadurch gekennzeichnet, daß** das Führungselement ein in den Fisch eindringender Stichel (20) ist.

7. Verfahren zum Steuern des Arbeitsbeginns mindestens eines Werkzeuges in einer Fischbearbeitungsmaschine, in der Werkzeug und Fisch entlang eines vorgegebenen Förderweges relativ zueinander bewegt werden, wobei die Position des Fisches in bezug auf das Werkzeug mit Hilfe eines in das Innere des Fisches eindringenden Führungselements bestimmt wird und das Werkzeug nach Ausrichten des Fisches infolge Eindringens dieses Führungselements mit seinem Angriff am bzw. Eingriff in den Fisch beginnt, **dadurch gekennzeichnet, daß** die Position des Fisches relativ zum Führungselement kontrolliert und nur bei Erreichen eines einstellbaren Position-Sollwertes ein Signal zum Betätigen des Werkzeuges ausgelöst wird.

8. Verfahren nach Anspruch 7, **dadurch gekennzeichnet, daß** das Kontrollieren der Position Fisch/Führungselement optisch erfolgt.

9. Verfahren nach Anspruch 7, **dadurch gekennzeichnet, daß** das Kontrollieren der Position Fisch/Führungselement mechanisch erfolgt.

10. Verfahren nach Anspruch 9, **dadurch gekennzeichnet, daß** das mechanische Kontrollieren durch Abtasten des Fischkörpers und Überwachung der Tastposition relativ zu einem Sollwert für die Signalauslösung erfolgt.

11. Verfahren nach Anspruch 10, **dadurch gekennzeichnet, daß** das Abtasten als Doppeltastung an zwei Tastpunkten durchgeführt und der Sollwert für die Signalauslösung durch Tastpunktvergleich ermittelt wird.

## Claims

1. Device for controlling the commencement of operation of at least one tool in a fish processing machine in which tool and fish are moved relative to each other along a given conveying path, wherein the position of the fish (10) in relation to the tool is determined by means of a guide element (20) which penetrates into the interior (11) of the fish, and after alignment of the fish as a result of penetration of this guide element the tool (21) begins its engagement on or intervention in the fish, **characterized in that** associated with the guide element (20) is a monitoring device (30) which includes a sensor (31) for the guide element/fish position (20, 10), a computer (32) for comparison of nominal and actual values, which is connected to the sensor, and an actuator for the tool (21), which is connected to this computer.

2. Device according to claim 1, **characterized in that** the sensor (31) includes a transmitter/receiver device (311, 312).

3. Device according to claim 2, **characterized in that** the transmitter is a light source (312) and the receiver forms the end of an optical fibre (311) which is arranged in the guide element (20) and connected to the computer in the form of an evaluating unit (321).

4. Device according to claim 1, **characterized in that** the sensor is a mechanical feeler (315) for the position of the fish (10) relative to the guide element (20).

5. Device according to claim 4, **characterized in that** the feeler is designed as a double sensing lever (315) with one lever element movable separately from the other on either side of the guide element (20).

6. Device according to any one of claims 1 to 5, **characterized in that** the guide element is a spike (20) which penetrates into the fish.

7. Method for controlling the commencement of operation of at least one tool in a fish processing machine in which tool and fish are moved relative to each other along a given conveying path, wherein the position of the fish in relation to the tool is determined by means of a guide element which penetrates into the interior of the fish, and after alignment of the fish as a result of penetration of this guide element the tool begins its engagement on or intervention in the fish, **characterized in that** the position of the fish relative to the guide element is monitored, and only on reaching an adjustable nominal position value is a signal for actuating the tool triggered.

8. Method according to claim 7, **characterized in that** monitoring of the fish/guide element position is effected optically.

9. Method according to claim 7, **characterized in that** monitoring of the fish/guide element position is effected mechanically.

10. Method according to claim 9, **characterized in that** mechanical monitoring is effected by scanning the fish's body and monitoring the sensed position relative to a nominal value for triggering a signal.

11. Method according to claim 10, **characterized in that** scanning is performed as a double scan at two scanning points, and the nominal value for triggering a signal is determined by comparison of scanning points.

## Revendications

1. Dispositif de commande du début du travail d'au moins un outil dans une machine de traitement de poisson dans laquelle l'outil et le poisson sont déplacés l'un par rapport à l'autre le long d'une trajectoire prédéterminée, la position du poisson (10) par rapport à l'outil étant déterminée à l'aide d'un élément de guidage (20) pénétrant à l'intérieur du poisson (11) et l'outil (21) venant en engagement avec le poisson après avoir orienté le poisson à la suite de la pénétration de cet élément de guidage, **caractérisé en ce qu'**un élément de surveillance (30) est associé à l'élément de guidage (20), lequel élément de surveillance comporte un capteur (31) détectant la position relative de l'élément de guidage et du poisson (20,10), un ordinateur (32) qui est raccordé au capteur et qui compare une valeur réelle à une valeur de consigne ainsi qu'un dispositif d'actionnement de l'outil (21) qui est raccordé à l'ordinateur.

2. Dispositif selon la revendication 1, **caractérisé en ce que** le capteur (31) comporte un dispositif émetteur/récepteur (311, 312).

3. Dispositif selon la revendication 2, **caractérisé en ce que** l'émetteur est formé par une source lumineuse (312) et le récepteur est formé par l'extrémité d'une fibre optique (311) placée dans l'élément de guidage (20) et reliée à l'ordinateur se présentant sous la forme d'une unité d'exploitation (321).

4. Dispositif selon la revendication 1, **caractérisé en ce que** le capteur est un palpeur mécanique (315) permettant de déterminer la position du poisson (10) par rapport à l'élément de guidage (20).

5. Dispositif selon la revendication 4, **caractérisé en ce que** le palpeur est conformé en double levier d'exploration (315) qui comporte de chaque côté de l'élément de guidage (20) un élément de levier mobile séparément.

6. Dispositif selon l'une des revendications 1 à 5, **caractérisé en ce que** l'élément de guidage est une lame biseautée (20) qui pénètre dans le poisson.

7. Procédé de commande du début du travail d'au moins un outil dans une machine de traitement de poisson dans laquelle l'outil et le poisson sont déplacés l'un par rapport à l'autre le long d'une trajectoire prédéterminée, la position du poisson par rapport à l'outil étant déterminée à l'aide de l'élément de guidage pénétrant à l'intérieur du poisson et l'outil venant en engagement avec le poisson après avoir orienté le poisson à la suite de la pénétration de cet élément de guidage, **caractérisé en ce que** la position du poisson par rapport à l'élément de guidage est contrôlée et un signal d'actionnement de l'outil n'est déclenché que lorsqu'une valeur de position de consigne réglable a été atteinte.

8. Procédé selon la revendication 7, **caractérisé en ce que** le contrôle de la position relative du poisson et de l'élément de guidage est effectué par des moyens optiques.

9. Procédé selon la revendication 7, **caractérisé en ce que** le contrôle de la position relative du poisson et de l'élément de guidage est effectué par des moyens mécaniques.

10. Procédé selon la revendication 9, **caractérisé en ce que** le contrôle mécanique est effectué en explorant le corps du poisson et en surveillant la position d'exploration par rapport à une valeur de consigne pour le déclenchement du signal.

11. Procédé selon la revendication 10, **caractérisé en ce que** l'exploration est réalisée sous la forme d'une double exploration en deux points d'exploration et la valeur de consigne pour le déclenchement du signal est déterminée par comparaison de points d'exploration.
